# FASCICULE DE BREVET EUROPEEN

(11) **EP 3 273 834 B1**
(45) Date de publication et mention de la délivrance du brevet: **10.04.2019**
(21) Numéro de dépôt: 16714502.8
(22) Date de dépôt: 24.03.2016
(51) Int. Cl.: A47J 45/06, A47J 37/10

(54) **DISPOSITIF DE GESTION DE LA CUISSON MUNI D'UN AFFICHEUR PERFECTIONNE**
MIT EINER VERBESSERTEN ANZEIGE AUSGESTATTETE VORRICHTUNG ZUR VERWALTUNG DES KOCHENS
DEVICE FOR MANAGING COOKING, FURNISHED WITH AN IMPROVED DISPLAY

(30) Priorité: 27.03.2015 FR 1552638
(43) Date de publication de la demande: 31.01.2018
(73) Titulaire: SEB S.A., 69130 Ecully (FR)
(72) Inventeur: ROUSSARD, Philippe, 73340 Le Noyer (FR); MILLS, Claire, 74000 Annecy (FR)
(74) Mandataire: Bourrières, Patrice
(86) Numéro de dépôt international: PCT/FR2016/050665
(87) Numéro de publication internationale: WO 2016/156709

(56) Documents cités:
- EP-A1- 2 208 448
- DE-A1-102010 010 498
- US-B2- 6 860 192

## Description

La présente invention concerne un dispositif de gestion de la cuisson d'aliments destiné à être agencé de manière amovible sur un récipient de cuisson coopérant avec une plaque de chauffe, le récipient de cuisson étant notamment une poêle, une casserole, un faitout ou un autocuiseur. L'invention concerne également un ensemble comprenant au moins un récipient de cuisson et un dispositif de gestion de la cuisson.

On connaît du document US6860192 un dispositif de gestion de la cuisson d'aliments destiné à être agencé de manière amovible sur un récipient de cuisson, notamment une poêle. Le dispositif de gestion de la cuisson comporte une mémoire dans laquelle est stocké le type du récipient de cuisson sur lequel il est agencé. Le type de récipient de cuisson en mémoire est accessible et modifiable manuellement par l'utilisateur. Le dispositif de gestion de la cuisson comporte un afficheur à cristaux liquides qui peut être à segments, permettant d'émettre des signaux visuels destinés à l'utilisateur. Le dispositif de gestion de la cuisson est conçu pour émettre des signaux destinés notamment à commander une plaque de chauffe et les signaux émis sont adaptés par le dispositif de gestion de la cuisson en fonction du type du récipient de cuisson sur lequel il est installé.

Cependant, un tel dispositif de gestion de la cuisson comporte un afficheur qui ne fournit aucune indication sur le type du récipient de cuisson sur lequel il est agencé. Ainsi, l'utilisateur doit penser à bien vérifier lors de l'adaptation du dispositif de gestion de la cuisson sur un récipient de cuisson que celui-ci est bien paramétré pour le bon type de récipient de cuisson utilisé. Si ce n'est pas le cas, lors de la cuisson, les signaux émis par le dispositif de gestion de la cuisson ne seront pas adaptés au type de récipient et le résultat de cuisson ne sera pas celui escompté.

Le but de la présente invention est de remédier aux inconvénients précités et de proposer un dispositif de gestion de la cuisson qui présente une ergonomie améliorée afin de garantir le résultat de la cuisson d'un aliment.

Un autre but de l'invention est de proposer un dispositif de gestion de la cuisson qui soit de conception simple et économique à mettre en oeuvre.

Un autre but de l'invention est de proposer un dispositif de gestion de la cuisson qui présente un fonctionnement fiable et répétitif, durable dans le temps.

Ces buts sont atteints avec un dispositif de gestion de la cuisson d'aliments destiné à être agencé de manière amovible sur un récipient de cuisson, ledit dispositif de gestion de la cuisson comportant un dispositif de commande dans lequel est mémorisée une donnée caractéristique du type du récipient de cuisson sur lequel il est agencé et/ou plusieurs programmes de cuisson activés par un organe de commande, ainsi qu'un afficheur à cristaux liquides à segments permettant d'émettre des signaux visuels destinés à l'utilisateur, caractérisé en ce que le dispositif de commande active un ou plusieurs segments de l'afficheur permettant d'afficher un premier pictogramme représentant un premier type de récipient de cuisson correspondant à la donnée mémorisée et/ou un premier programme de cuisson activé, le dispositif de commande étant conçu pour afficher au moins un deuxième pictogramme représentant un deuxième type de récipient de cuisson et/ou un deuxième programme de cuisson en activant au moins un segment activé pour afficher le premier pictogramme.

Par un dispositif de gestion de la cuisson destiné à être agencé de manière amovible sur un récipient de cuisson, on comprend que le dispositif de gestion de la cuisson peut être séparé par l'utilisateur facilement du récipient de cuisson, sans nécessiter la mise en oeuvre d'un outil.

Par le type du récipient de cuisson, on comprend le type et/ou la taille du récipient de cuisson.

Par un dispositif de gestion de la cuisson, on comprend notamment un dispositif de suivi de cuisson permettant la gestion de la cuisson.

L'utilisation d'un afficheur à cristaux liquides à segments permet la mise en oeuvre d'un dispositif de commande comprenant un micro contrôleur muni d'un nombre d'entrées / sorties limité, notamment en comparaison d'un afficheur à cristaux liquides matriciel qui comporte une multitude de points à commander nécessitant un micro contrôleur muni d'un nombre d'entrées/sorties important. Le dispositif de gestion de la cuisson est par conséquent économique à mettre en oeuvre. Par segment, on comprend un élément isolé illustrant une partie d'un pictogramme ou un ensemble d'éléments commandés simultanément par une sortie du micro contrôleur.

L'afficheur du dispositif de gestion de la cuisson affiche un pictogramme représentatif du type de récipient de cuisson sur lequel il est agencé et/ou du programme de cuisson activé. Le pictogramme affiché permet à l'utilisateur de vérifier que le dispositif de gestion de cuisson est bien paramétré pour le récipient de cuisson sur lequel il est installé et/ou que le programme de cuisson activé correspond bien au programme de cuisson mis en oeuvre. Ainsi, les signaux émis par le dispositif de gestion de la cuisson sont toujours adaptés au type de récipient de cuisson et/ou au programme de cuisson mis en oeuvre. En conséquence, les signaux émis sont fiables et permettent de garantir le résultat de cuisson de l'aliment.

Par le dispositif de commande active un ou plusieurs segments de l'afficheur permettant d'afficher un pictogramme représentant un programme de cuisson activé, on comprend que le pictogramme est présent pendant toute la durée pendant laquelle le programme de cuisson est activé. D'autres pictogrammes, notamment pour alerter l'utilisateur, peuvent être affichés en même temps que le pictogramme représentant le programme de cuisson activé. Par programme de cuisson, on comprend mode de cuisson.

De plus, le dispositif de commande active, pour afficher les premier et deuxième pictogrammes, au moins un segment commun. Une telle disposition permet de diminuer le nombre de segments de l'afficheur ainsi que sa taille.

Avantageusement, le dispositif de commande active un segment en forme de U aplati comprenant deux branches latérales courtes pour afficher le premier pictogramme représentant une poêle, la donnée mémorisée caractérisant une poêle.

Ainsi, un premier pictogramme représentant une poêle peut être affiché en activant un segment. Une telle disposition permet d'afficher un pictogramme représentant une poêle de manière très économique.

De préférence, le dispositif de commande active le segment en forme de U aplati comprenant deux branches latérales courtes ainsi qu'un segment formé par deux lignes rectilignes agencées dans le prolongement des branches latérales pour afficher le deuxième pictogramme représentant une casserole ou un faitout, la donnée mémorisée caractérisant une casserole ou un faitout.

Ainsi, un deuxième pictogramme représentant une casserole ou un faitout peut être affiché en activant un segment en plus du segment activé pour afficher le pictogramme d'une poêle. Une telle disposition permet d'afficher deux pictogrammes représentant une poêle ou une casserole ou un faitout de manière très économique.

De manière avantageuse, le nombre de segments activés par le dispositif de commande pour former les premier et deuxième pictogrammes est inférieur à 5, de préférence inférieur à 3.

Avantageusement, le dispositif de commande active le segment en forme de U aplati comprenant deux branches latérales courtes, le segment formé par deux lignes rectilignes agencées dans le prolongement des branches latérales ainsi qu'un segment incurvé et un segment formé par deux crochets et une ligne verticale pour afficher un troisième pictogramme représentant un autocuiseur, la donnée mémorisée caractérisant un autocuiseur.

Ainsi, un troisième pictogramme représentant un autocuiseur peut être affiché en activant deux segments en plus du segment activé pour afficher le pictogramme d'une poêle et d'un segment activés pour afficher le pictogramme d'une casserole ou d'un faitout. Une telle disposition permet d'afficher trois pictogrammes représentant une poêle ou une casserole ou un faitout ou un autocuiseur de manière très économique.

De préférence, le nombre de segments activés par le dispositif de commande pour former les premier, deuxième et troisième pictogrammes est inférieur à 7, de préférence inférieur à 5.

De manière avantageuse, le dispositif de commande active au moins un même segment de l'afficheur pour afficher le pictogramme représentant le programme de cuisson, lorsqu'il active le ou les segments représentant le pictogramme représentant le type de récipient de cuisson.

De préférence, le dispositif de gestion de la cuisson comporte un organe de commande manuel permettant à l'utilisateur de modifier la donnée caractéristique du type du récipient de cuisson mémorisée.

Avantageusement, le dispositif de gestion de la cuisson comporte un système de reconnaissance automatique permettant de modifier la donnée caractéristique du type du récipient de cuisson mémorisée de manière autonome.

Ainsi, le dispositif de gestion de la cuisson reconnait de manière autonome le type de récipient de cuisson sur lequel il est agencé. Ainsi, les signaux émis par l'afficheur du dispositif de gestion de la cuisson sont toujours adaptés au type de récipient de cuisson reconnu.

De préférence, le dispositif de gestion de la cuisson comporte des moyens de connexion, notamment des plots, reliés au dispositif de commande, les moyens de connexion étant destinés à coopérer avec un capteur de température agencé sur le récipient de cuisson.

Ainsi, le dispositif de commande est relié électriquement et de manière amovible à un capteur de température qui permet d'obtenir une donnée représentative de la température de cuisson des aliments. Le dispositif de commande peut d'adapter les signaux émis par l'afficheur en fonction des mesures réalisées sur le capteur.

Avantageusement, le dispositif de commande active un segment de l'afficheur de forme sensiblement rectangulaire comprenant une entaille représentant un aliment à préparer, le dispositif de commande activant un segment formé de plusieurs lignes courtes agencées au-dessus de l'aliment lorsque le programme «saisir» est activé pour afficher un premier pictogramme ou un segment formé de plusieurs lignes courtes agencées au-dessus de l'entaille lorsque le programme « cuire à coeur» est activé pour afficher un second pictogramme ou un segment formé de plusieurs disques agencés au-dessus de l'aliment lorsque le programme « mijoter» est activé pour afficher un troisième pictogramme.

Ainsi, le dispositif de commande active, pour afficher les premier, deuxième et troisième pictogrammes correspondant au programme de cuisson activé, au moins un segment commun. Une telle disposition permet de diminuer le nombre de segments de l'afficheur ainsi que sa taille.

Avantageusement, le dispositif de commande active un ou plusieurs segments de l'afficheur permettant d'afficher un pictogramme représentant le programme de cuisson activé, ainsi que le pictogramme représentant le type de récipient de cuisson correspondant à la donnée mémorisée, le pictogramme représentant le programme de cuisson étant conçu pour être affiché dans le pictogramme représentant le type de récipient de cuisson.

L'afficheur du dispositif de gestion de la cuisson affiche un pictogramme combinant un pictogramme représentatif du type de récipient de cuisson et un pictogramme représentatif du programme de cuisson sélectionné, le pictogramme représentatif du programme de cuisson sélectionné étant inséré dans le pictogramme représentatif du type de récipient de cuisson. Ainsi, la surface de l'afficheur peut être réduite.

L'invention se rapporte également à un ensemble formé par au moins un récipient de cuisson et un dispositif de gestion de la cuisson tel que décrit ci-dessus.

Avantageusement le récipient de cuisson comporte une poignée, le dispositif de gestion de la cuisson étant agencé sur la poignée.

Par poignée, on comprend que la poignée peut être une poignée longue agencée sur une poêle ou une anse agencée sur une casserole ou un faitout.

Une telle disposition permet de réaliser de manière économique un dispositif de gestion de la cuisson qui peut être installé sur un ensemble de récipient de cuisson. En effet, la zone d'assemblage du dispositif de la gestion de cuisson sur la poignée est identique pour chaque récipient de cuisson.

L'invention sera mieux comprise à l'étude des modes de réalisation pris à titre nullement limitatif et illustrés dans les figures annexées dans lesquelles :
- La figure 1 illustre une vue en perspective d'un récipient de cuisson comportant un dispositif de gestion de la cuisson selon un mode particulier de réalisation de l'invention.
- La figure 2 illustre une vue en perspective éclatée de la poignée du récipient de cuisson comportant le dispositif de gestion de la cuisson illustré à la figure 2.
- La figure 3 illustre une vue du dessus du dispositif de gestion de la cuisson illustré à la figure1, ainsi que l'afficheur.
- La figure 4 illustre une table des pictogrammes affichés par l'afficheur illustré à la figure 3, en fonction du type de récipient de cuisson et du programme de cuisson.

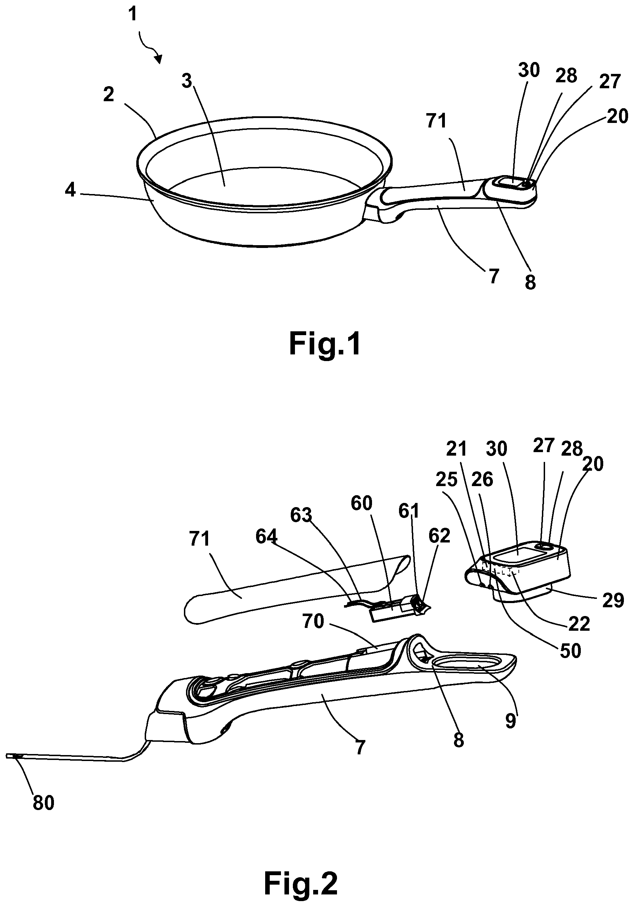

Tel que visible aux figures 1 à 2, un récipient de cuisson 1 comporte une calotte 2 qui comprend un fond 3 et une paroi latérale 4. La calotte 2 est réalisée en un matériau amagnétique, notamment en aluminium, par exemple par une opération de frappe d'un disque ou par une opération de fonderie. Le fond 3 présente une épaisseur dans laquelle est rapporté un capteur de température 80, notamment un thermocouple ou une résistance à coefficient de température négatif. Le récipient de cuisson 1 comporte une poignée 7 dans laquelle est agencé de manière détachable un dispositif de gestion de la cuisson 20. Le dispositif de gestion de la cuisson 20 est relié, par exemple électriquement, au capteur de température 80 pour recevoir des informations représentatives de la température du fond 3. Le dispositif de gestion de la cuisson comporte un afficheur 30 et un dispositif de commande 50, notamment de l'afficheur 30.

Tel que visible à la figure 2, la poignée 7 comporte une cavité 70 dans laquelle est agencé un connecteur 60. La cavité 70 est fermée par un capot 71. Le connecteur 60 est muni d'une première 61 et deuxième 62 zones de contact. Les première 61 et deuxième 62 zones de contact sont reliées au capteur de température 80 par deux éléments conducteurs 63, 64. Le dispositif de gestion de la cuisson 20 comporte des premier 25 et deuxième 26 plots reliés au dispositif de commande 50 et destinés à coopérer avec les première 61 et deuxième 62 zones de contact. La poignée 7 comporte un logement 8 muni d'une ouverture 9 traversante. Le dispositif de gestion de la cuisson 20 comporte un pied 29 destiné à coopérer avec l'ouverture 9 traversante pour maintenir le dispositif de gestion de la cuisson 20 sur la poignée 7, ainsi que les premier 25 et deuxième 26 plots en contact avec les première 61 et deuxième 62 zones de contact. Le pied 29 peut recevoir une batterie d'alimentation (non représentée sur les figures) du dispositif de gestion de la cuisson 20. Avantageusement, l'ouverture 9 traversante est destinée à former un anneau d'accrochage du récipient de cuisson 1.

Le dispositif de commande 50 comporte un système de reconnaissance 21 automatique du type du récipient de cuisson 1 sur lequel le dispositif de gestion de la cuisson 20 est agencé. Le système de reconnaissance 21 automatique agit sur l'afficheur 30 pour adapter les signaux émis par l'afficheur 30 en fonction du type du récipient de cuisson 1 reconnu.

Le dispositif de gestion de la cuisson 20 est destiné à coopérer avec des récipients de cuisson de type différents comportant chacun un capteur de température 80, notamment un thermocouple présentant une plage de résistance propre et qui sera caractéristique du type du récipient de cuisson. Le système de reconnaissance 21 automatique comporte une mémoire 22 dans laquelle sont mémorisées les plages de valeurs de résistance associées chacune à une donnée caractéristique du type de récipient de cuisson. Le système de reconnaissance 21 automatique est conçu pour détecter la valeur de résistance du thermocouple et, à partir des plages de valeurs mémorisées déterminer la donnée caractéristique du type de récipient de cuisson et la stocker dans la mémoire 22. Le dispositif de commande 50 pilote l'afficheur 30 en fonction de la donnée stockée dans la mémoire 22.

Le dispositif de gestion de la cuisson 20 comporte un bouton marche/arrêt 28. A chaque mise en marche, le système de reconnaissance 21 automatique est activé pour détecter le type du récipient de cuisson sur lequel le dispositif de gestion de la cuisson 20 est installé.

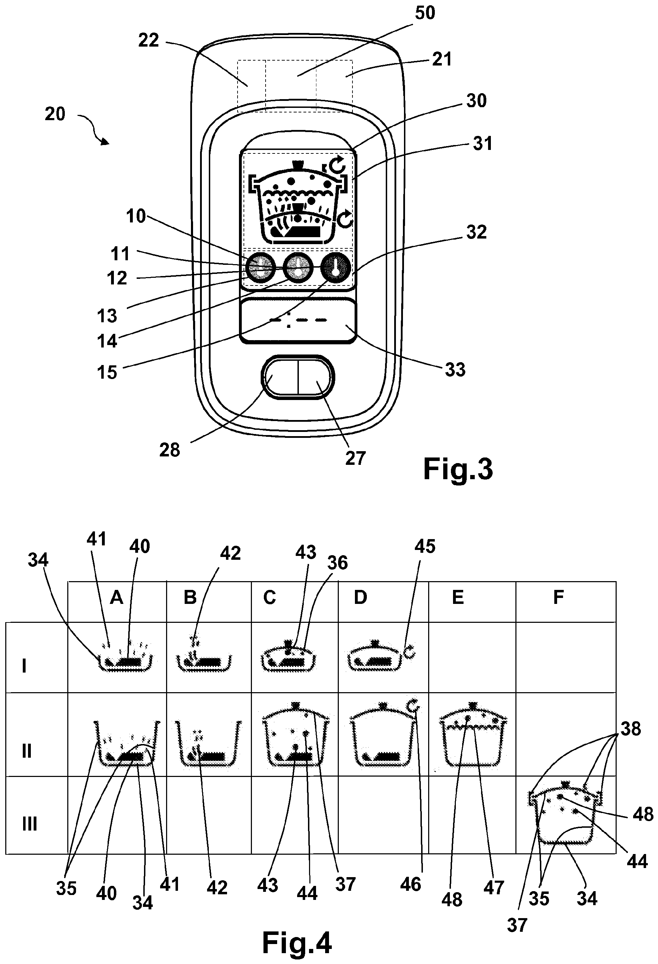

Conformément à la figure 3, l'afficheur 30 comporte une zone 31 présentant un agencement particulier de segments, destinée à afficher des pictogrammes représentant un type de récipient de cuisson et des pictogrammes représentant des programmes de cuisson. Les programmes de cuisson sont stockés dans la mémoire 22 et le dispositif de gestion de la cuisson 20 comporte un organe de commande 27 qui permet d'activer un programme de cuisson. Le dispositif de commande 50 affiche dans la zone 31 le pictogramme représentant de programme de cuisson activé.

La figure 4 illustre une table des pictogrammes affichés par la zone 31 de l'afficheur 30 en fonction du type de récipient de cuisson et du programme de cuisson sélectionné. D'une manière avantageuse, le pictogramme représentant le programme de cuisson est inséré dans le pictogramme représentant le récipient de cuisson.

Le type de récipient de cuisson caractérisé par une donnée référencée I dans la mémoire 22 correspond à une poêle. Le dispositif de commande 50 active un segment 34 de l'afficheur 30 en forme de U aplati comprenant deux branches latérales courtes pour afficher le pictogramme représentant une poêle.
Le type de récipient de cuisson caractérisé par une donnée référencée II correspond à une casserole ou un faitout. Le dispositif de commande 50 active le segment 34 en forme de U aplati comprenant deux branches latérales courtes ainsi qu'un segment 35 formé par deux lignes rectilignes agencées dans le prolongement des branches latérales pour afficher le pictogramme représentant une casserole ou un faitout.
Le type de récipient de cuisson référencé III correspond à un autocuiseur. Le dispositif de commande 50 active le segment 34, le segment 35 ainsi qu'un segment 36 incurvé et un segment 38 formé par deux crochets et une ligne verticale pour afficher un troisième pictogramme représentant un autocuiseur. Les crochets figurent le verrouillage du couvercle et la ligne verticale la soupape d'échappement vapeur.

Le programme de cuisson référencé A correspond au programme « saisir» compatible avec une poêle ou une casserole ou un faitout. Le dispositif de commande 50 active un segment 40 de l'afficheur de forme sensiblement rectangulaire comprenant une entaille figurant un aliment à préparer et un segment 41 formé de plusieurs lignes courtes agencées au-dessus de l'aliment figurant un dégagement de chaleur.
Le programme de cuisson référencé B correspond au programme « cuire à coeur» compatible avec une poêle ou une casserole ou un faitout. Le dispositif de commande 50 active le segment 40 et un segment 42 formé de plusieurs lignes courtes agencées au-dessus de l'entaille figurant un dégagement de chaleur de l'intérieur de l'aliment.
Le programme de cuisson référencé C correspond au programme «mijoter» compatible avec une poêle ou une casserole ou un faitout. Le dispositif de commande 50 active le segment 40 et un segment 43 formé de plusieurs disques agencés au-dessus de l'aliment figurant un dégagement de bulles de vapeur. Le dispositif de commande 50 active également un segment 37 incurvé figurant un couvercle lorsque le récipient de cuisson est une poêle. Le dispositif de commande 50 active un segment 44 formé de plusieurs disques et le segment 36 incurvé figurant un couvercle lorsque le récipient de cuisson est une casserole ou un faitout.
Le programme de cuisson référencé D correspond au programme «réchauffer» compatible avec une poêle ou une casserole ou un faitout. Le dispositif de commande 50 active le segment 40 et un segment 45, 46 formé d'une flèche circulaire agencée au-dessus du récipient de cuisson figurant le symbole du réchauffage. Le dispositif de commande 50 active également le segment 36 incurvé ou le segment 37 incurvé.
Le programme de cuisson référencé E correspond au programme «bouillir» compatible avec une casserole ou un faitout. Le dispositif de commande 50 active un segment 47 formé d'une ligne ondulée et un segment 48 formé de plusieurs disques agencés au-dessus de la ligne figurant un dégagement de bulles de vapeur au-dessus d'un aliment liquide. Le dispositif de commande 50 active également le segment 37 incurvé.
Le programme de cuisson référencé F correspond au programme «cuisson sous pression» compatible avec un autocuiseur. Le dispositif de commande 50 active les segments 44, 48 formé de plusieurs disques figurant un dégagement de bulles de vapeur.

Tel que visible à la figure 3, l'afficheur 30 comporte une zone 32 d'information de l'état de la température de cuisson du récipient de cuisson par rapport au programme de cuisson sélectionné. La zone 32 comporte trois pictogrammes 10, 11, 12 de couleur imprimé sur l'afficheur 30 : un pictogramme 10 bleu, un pictogramme 11 vert et un pictogramme 12 rouge. Le dispositif de commande 50 active un segment 13 circulaire entourant le pictogramme 10 vert pour indiquer à l'utilisateur que la température de cuisson est correcte. Le dispositif de commande 50 active un segment 14 circulaire entourant le pictogramme 11 bleu pour indiquer à l'utilisateur que la température de cuisson est trop basse et qu'il peut augmenter la puissance de chauffe. Le dispositif de commande 50 active un segment 15 circulaire entourant le pictogramme 12 rouge pour indiquer à l'utilisateur que la température de cuisson est trop élevée et qu'il est invité à diminuer la puissance de chauffe.

L'afficheur 30 comporte une zone 33 formant un timer pour afficher des durées de cuisson.

En utilisation, l'utilisateur choisit un récipient de cuisson 1 adapté à la taille et/ou au type d'aliments qu'il souhaite préparer, par exemple une poêle, et il adapte sur ce récipient de cuisson le dispositif de gestion de la cuisson 20. L'utilisateur met ensuite en marche le dispositif de gestion de la cuisson 20, ce qui active le système de reconnaissance 21 automatique qui détecte la valeur de résistance du capteur de température 80. Le système de reconnaissance 21 automatique détermine alors qu'il est agencé sur une poêle et le dispositif de commande 50 active un segment 34 de l'afficheur en forme de U aplati comprenant deux branches latérales courtes pour afficher le pictogramme représentant une poêle. L'utilisateur sélectionne ensuite le programme de cuisson à l'aide de l'organe de commande 27, par exemple le programme « saisir». Le dispositif de commande 50 active alors un segment 40 de l'afficheur de forme sensiblement rectangulaire comprenant une entaille figurant un aliment à préparer et un segment 41 formé de plusieurs lignes courtes agencées au-dessus de l'aliment figurant un dégagement de chaleur. L'utilisateur pose alors le récipient de cuisson 1 sur une plaque de chauffe qu'il a préalablement mis en marche. Lors de la préparation des aliments, le dispositif de commande 50 va activer en fonction du programme de chauffe sélectionné un des segments 13, 14, 15 circulaires entourant un des pictogrammes 10, 11, 12 colorés pour indiquer à l'utilisateur l'état de la température de cuisson et lui permettre d'agir sur la puissance de chauffe si nécessaire.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation, le dispositif de gestion de la cuisson 20 comporte un émetteur/récepteur d'ondes radio, notamment du type Bluetooth® pour coopérer avec un terminal distant, notamment un smartphone, qui comporte une application comprenant des recettes de cuisson d'aliments, chaque recette étant associée à un programme de cuisson.

## Revendications

1. Dispositif de gestion de la cuisson d'aliments (20) destiné à être agencé de manière amovible sur un récipient de cuisson (1), ledit dispositif de gestion de la cuisson (20) comportant un dispositif de commande (50) dans lequel est mémorisée une donnée caractéristique du type du récipient de cuisson (1) sur lequel il est agencé et/ou plusieurs programmes de cuisson activés par un organe de commande (27), ainsi qu'un afficheur (30) à cristaux liquides à segments permettant d'émettre des signaux visuels destinés à l'utilisateur, **caractérisé en ce que** le dispositif de commande (50) active un ou plusieurs segments (34, 35, 36, 37, 38) de l'afficheur (30) permettant d'afficher un premier pictogramme représentant un premier type de récipient de cuisson correspondant à la donnée mémorisée, le dispositif de commande (50) étant conçu pour afficher au moins un deuxième pictogramme représentant un deuxième type de récipient de cuisson en activant au moins un segment (34) activé pour afficher le premier pictogramme.

2. Dispositif de gestion de la cuisson (20) selon la revendication 1, **caractérisé en ce que** le dispositif de commande (50) active un segment (34) en forme de U aplati comprenant deux branches latérales courtes pour afficher le premier pictogramme représentant une poêle, la donnée mémorisée caractérisant une poêle.

3. Dispositif de gestion de la cuisson (20) selon la revendication 2, **caractérisé en ce que** le dispositif de commande (50) active le segment (34) en forme de U aplati comprenant deux branches latérales courtes ainsi qu'un segment (35) formé par deux lignes rectilignes agencées dans le prolongement des branches latérales pour afficher le deuxième pictogramme représentant une casserole ou un faitout, la donnée mémorisée caractérisant une casserole ou un faitout.

4. Dispositif de gestion de la cuisson (20) selon la revendication 3, **caractérisé en ce que** le dispositif de commande (50) active le segment (34) en forme de U aplati comprenant deux branches latérales courtes, le segment (35) formé par deux lignes rectilignes agencées dans le prolongement des branches latérales ainsi qu'un segment 37 incurvé et un segment 38 formé par deux crochets et une ligne verticale pour afficher un troisième pictogramme représentant un autocuiseur, la donnée mémorisée caractérisant un autocuiseur.

5. Dispositif de gestion de la cuisson (20) selon la revendication 4, **caractérisé en ce que** le nombre de segments activés par le dispositif de commande pour former les premier, deuxième et troisième pictogrammes est inférieur à 7, de préférence inférieur à 5.

6. Dispositif de gestion de la cuisson (20) selon l'une quelconque des revendications précédentes, **caractérisé en ce qu'**il comporte un organe de commande manuel permettant à l'utilisateur de modifier la donnée caractéristique du type du récipient de cuisson (1) mémorisée.

7. Dispositif de gestion de la cuisson (20) selon l'une quelconque des revendications 1 à 5, **caractérisé en ce qu'**il comporte un système de reconnaissance (21) automatique permettant de modifier la donnée caractéristique du type du récipient de cuisson (1) mémorisée de manière autonome.

8. Dispositif de gestion de la cuisson (20) selon l'une quelconque des revendications précédentes, **caractérisé en ce qu'**il comporte des moyens de connexion, notamment des plots (25, 26, 27), reliés au dispositif de commande (50), lesdits moyens de connexion étant destinés à coopérer avec un capteur de température (80) agencé sur le récipient de cuisson (1).

9. Dispositif de gestion de la cuisson (20) selon la revendication 1, **caractérisé en ce que** le dispositif de commande (50) active un segment (40) de l'afficheur de forme sensiblement rectangulaire comprenant une entaille représentant un aliment à préparer, le dispositif de commande (50) activant un segment (41) formé de plusieurs lignes courtes agencées au-dessus de l'aliment lorsque le programme «saisir» est activé pour afficher un premier pictogramme ou un segment (42) formé de plusieurs lignes courtes agencées au-dessus de l'entaille lorsque le programme «cuire à coeur» est activé pour afficher un second pictogramme ou un segment (43) formé de plusieurs disques agencés au-dessus de l'aliment lorsque le programme «mijoter» est activé pour afficher un troisième pictogramme.

10. Dispositif de gestion de la cuisson (20) selon l'une quelconque des revendications précédentes, **caractérisé en ce que** le dispositif de commande (50) active un ou plusieurs segments de l'afficheur permettant d'afficher un pictogramme représentant le programme de cuisson activé, ainsi que le pictogramme représentant le type de récipient de cuisson correspondant à la donnée mémorisée, le pictogramme représentant le programme de cuisson étant conçu pour être affiché dans le pictogramme représentant le type de récipient de cuisson.

11. Ensemble formé par au moins un récipient de cuisson (1) et un dispositif de gestion de la cuisson (20) selon l'une quelconque des revendications précédentes.

12. Ensemble selon la revendication 11, **caractérisé en ce que** le récipient de cuisson (1) comporte une poignée (7), le dispositif de gestion de la cuisson (20) étant agencé sur la poignée (7).

## Patentansprüche

1. Vorrichtung zum Kochmanagement von Lebensmitteln (20), die dazu bestimmt ist, abnehmbar auf einem Kochgefäß (1) angeordnet zu sein, wobei die Vorrichtung zum Kochmanagement (20) eine Steuervorrichtung (50), in der ein Kenndatenelement, das kennzeichnend für den Typ des Kochgefäßes (1) ist, auf dem sie angeordnet ist, und / oder mehrere durch ein Steuerelement (27) aktivierte Kochprogramme gespeichert sind, sowie eine Flüssigkristallanzeige (30) mit Segmenten aufweist, die es ermöglicht, visuelle Signale auszusenden, die für den Benutzer bestimmt sind, **dadurch gekennzeichnet, dass** die Steuervorrichtung (50) ein oder mehrere Segmente (34, 35, 36, 37, 38) der Anzeige (30) aktiviert, die es ermöglicht, ein erstes Piktogramm anzuzeigen, das einen ersten Typ des Kochgefäßes darstellt, das dem gespeicherten Datenelement entspricht, wobei die Steuervorrichtung (50) dazu eingerichtet ist, mindestens ein zweites Piktogramm, das einen zweiten Typ des Kochgefäßes darstellt, durch Aktivieren mindestens eines Segments (34) anzuzeigen, das aktiviert ist, um das erste Piktogramm anzuzeigen.

2. Vorrichtung zum Kochmanagement (20) nach Anspruch 1, **dadurch gekennzeichnet, dass** die Steuervorrichtung (50) ein flaches U-förmiges Segment (34) aktiviert, das zwei kurze seitliche Zweige umfasst, um das Piktogramm anzuzeigen, das eine Pfanne darstellt, wobei das gespeicherte Datenelement eine Pfanne kennzeichnet.

3. Vorrichtung zum Kochmanagement (20) nach Anspruch 2, **dadurch gekennzeichnet, dass** die Steuervorrichtung (50) das flache U-förmige Segment (34), das zwei kurze seitliche Äste umfasst, sowie ein Segment (35) aktiviert, das durch zwei geradlinige Linien gebildet ist, die in der Verlängerung der seitlichen Zweige angeordnet sind, um das zweite Piktogramm anzuzeigen, das einen Kochtopf oder einen Schmortopf darstellt, wobei das gespeicherte Datenelement einen Kochtopf oder einen Schmortopf kennzeichnet.

4. Vorrichtung zum Kochmanagement (20) nach Anspruch 3, **dadurch gekennzeichnet, dass** die Steuervorrichtung (50) das flache U-förmige Segment (34) aktiviert, das zwei kurze seitliche Zweige, das Segment (35), das aus zwei geradlinigen Linien gebildet ist, die in der Verlängerung der seitlichen Zweige angeordnet sind, sowie ein gekrümmtes Segment 37 und ein Segment 38 umfasst, das aus zwei Haken und einer vertikalen Linie gebildet ist, um ein drittes Piktogramm anzuzeigen, das einen Schnellkochtopf darstellt, wobei das gespeicherte Datenelement einen Schnellkochtopf kennzeichnet.

5. Vorrichtung zum Kochmanagement (20) nach Anspruch 4, **dadurch gekennzeichnet, dass** die Anzahl der Segmente, die von der Steuervorrichtung aktiviert werden, um das erste, zweite und dritte Piktogramm zu bilden, weniger als 7, vorzugsweise weniger als 5 beträgt.

6. Vorrichtung zum Kochmanagement (20) nach einem der vorhergehenden Ansprüche, **dadurch gekennzeichnet, dass** sie ein manuelles Steuerelement aufweist, das es dem Benutzer ermöglicht, das gespeicherte Kenndatenelement des Typs des Kochgefäßes (1) zu modifizieren.

7. Vorrichtung zum Kochmanagement (20) nach einem der Ansprüche 1 bis 5, **dadurch gekennzeichnet, dass** sie ein automatisches Erkennungssystem (21) aufweist, das es ermöglicht, das autonom gespeicherte Kenndatenelement zu modifizieren, das kennzeichnend für den Typ des Kochgefäßes (1) ist.

8. Vorrichtung zum Kochmanagement (20) nach einem der vorhergehenden Ansprüche, **dadurch gekennzeichnet, dass** sie Verbindungsmittel, insbesondere Blöcke (25, 26, 27), aufweist, die mit der Steuervorrichtung (50) verbunden sind, wobei die Verbindungsmittel dazu bestimmt sind, mit einem Temperatursensor (80) zusammenzuwirken, der auf dem Kochbehälter (1) angeordnet ist.

9. Vorrichtung zum Kochmanagement (20) nach Anspruch 1, **dadurch gekennzeichnet, dass** die Steuervorrichtung (50) ein Segment (40) der im Wesentlichen rechteckigen Anzeige aktiviert, die eine Einkerbung umfasst, die ein zuzubereitendes Lebensmittel darstellt, wobei die Steuervorrichtung (50) ein Segment (41) aktiviert, das aus mehreren kurzen Linien gebildet ist, die über dem Lebensmittel angeordnet sind, wenn das Programm "verstehen" aktiviert ist, um ein erstes Piktogramm oder ein aus mehreren kurzen Linien gebildetes Segment (42) anzuzeigen, das oberhalb der Kerbe angeordnet ist, wenn das Programm "weich kochen" aktiviert ist, um ein zweites Piktogramm oder ein Segment (43) anzuzeigen, das aus mehreren Scheiben gebildet ist, die über dem Lebensmittel angeordnet sind, wenn das Programm "köcheln" aktiviert ist, um ein drittes Piktogramm anzuzeigen.

10. Vorrichtung zum Kochmanagement (20) nach einem der vorhergehenden Ansprüche, **dadurch gekennzeichnet, dass** die Steuervorrichtung (50) ein oder mehrere Segmente der Anzeige aktiviert, die es ermöglichen, ein Piktogramm, das das aktivierte Kochprogramm darstellt, sowie das Piktogramm anzuzeigen, das den Typ des Kochgefäßes darstellt, das den gespeicherten Daten entspricht, wobei das Piktogramm, das das Kochprogramm darstellt, dazu eingerichtet ist, in dem Piktogramm angezeigt zu werden, das den Typ des Kochgefäßes darstellt.

11. Anordnung, die aus mindestens einem Kochgefäß (1) und einer Vorrichtung zum Kochmanagement (20) nach einem der vorhergehenden Ansprüche gebildet ist.

12. Anordnung nach Anspruch 11, **dadurch gekennzeichnet, dass** das Kochgefäß (1) einen Griff (7) aufweist, wobei die Vorrichtung zum Kochmanagement (20) auf dem Griff (7) angeordnet ist.

## Claims

1. Device for managing the cooking of foods (20) intended to be arranged in a removable manner on a cooking receptacle (1), said device for managing cooking (20) comprising a control device (50) in which is stored a piece of data characteristic of the type of cooking receptacle (1) whereon it is arranged and/or several cooking programmes activated by a control member (27), as well as a segmented liquid crystal display (30) making it possible to emit visual signals intended for the user, **characterised in that** the control device (50) activates one or several segments (34, 35, 36, 37, 38) of the display (30) making it possible to display a first pictogram representing a first type of cooking receptacle corresponding to the piece of data stored, the control device (50) being designed to display at least one second pictogram representing a second type of cooking receptacle by activating at least one segment (34) activated to display the first pictogram.

2. Device for managing cooking (20) according to claim 1, **characterised in that** the control device (50) activates a segment (34) in the shape of a flattened U comprising two short lateral branches in order to display the first pictogram representing a frying pan, the piece of data stored characterising a frying pan.

3. Device for managing cooking (20) according to claim 2, **characterised in that** the control device (50) activates the segment (34) in the shape of a flattened U comprising two short lateral branches as well as a segment (35) formed by two straight lines arranged in the extension of the lateral branches in order to display the second pictogram representing a saucepan or a Dutch oven, with the stored piece of data characterising a saucepan or a Dutch oven.

4. Device for managing cooking (20) according to claim 3, **characterised in that** the control device (50) activates the segment (34) in the shape of a flattened U comprising two short lateral branches, the segment (35) formed by two straight lines arranged in the extension of the lateral branches as well as a curved segment 37 and a segment 38 formed by two hooks and a vertical line in order to display a third pictogram representing a pressure cooker, with the stored piece of data characterising a pressure cooker.

5. Device for managing cooking (20) according to claim 4, **characterised in that** the number of segments activated by the control device in order to form the first, second and third pictograms is less than 7, preferably less than 5.

6. Device for managing cooking (20) according to any preceding claim, **characterised in that** it comprises a manual control member that allows the user to modify the piece of data characteristic of the type of cooking receptacle (1) stored.

7. Device for managing cooking (20) according to any of claims 1 to 5, **characterised in that** it comprises an automatic recognition system (21) that makes it possible to modify the piece of data characteristic of the type of cooking receptacle (1) stored autonomously.

8. Device for managing cooking (20) according to any preceding claim, **characterised in that** it comprises means of connection, in particular lugs (25, 26, 27), connected to the control device (50), said means of connection being intended to cooperate with a temperature sensor (80) arranged on the cooking receptacle (1).

9. Device for managing cooking (20) according to claim 1, **characterised in that** the control device (50) activates a segment (40) of the display with a substantially rectangular shape comprising a notch representing a food to be prepared, the control device (50) activating a segment (41) formed from several short lines arranged above the food when the "sear" programme is activated in order to display a first pictogram or a segment (42) formed from several short lines arranged above the notch when the "cook thoroughly" programme is activated in order to display a second pictogram or a segment (43) formed of several discs arranged above the food when the "simmer" programme is activated to display a third pictogram.

10. Device for managing cooking (20) according to any preceding claim, **characterised in that** the control device (50) activates one or several segments of the display that makes it possible to display a pictogram representing the activated cooking programme, as well as the pictogram representing the type of cooking receptacle corresponding to the piece of data stored, the pictogram representing the cooking programme being designed to be displayed in the pictogram representing the type of cooking receptacle.

11. Assembly formed by at least one cooking receptacle (1) and a device for managing cooking (20) according to any preceding claim.

12. Assembly according to claim 11, **characterised in that** the cooking receptacle (1) comprises a handle (7), the device for managing cooking (20) being arranged on the handle (7).
